(19) Europäisches Patentamt / European Patent Office / Office européen des brevets

(11) **EP 4 118 763 B1**

(12) **EUROPEAN PATENT SPECIFICATION**

(45) Date of publication and mention of the grant of the patent:
**29.07.2026 Bulletin 2026/31**

(21) Application number: **21703260.6**

(22) Date of filing: **03.02.2021**

(51) International Patent Classification (IPC):
**H04L 45/12** (2022.01)    **H04L 45/484** (2022.01)
**H04L 45/64** (2022.01)    **H04L 45/03** (2022.01)

(52) Cooperative Patent Classification (CPC):
**H04L 45/64; H04L 45/484;** H04L 45/03;
H04L 45/123

(86) International application number:
**PCT/EP2021/052530**

(87) International publication number:
**WO 2022/167068 (11.08.2022 Gazette 2022/32)**

(54) **APPARATUS AND METHODS FOR VIRTUAL TOPOLOGIES IN IP ROUTING**

VORRICHTUNG UND VERFAHREN FÜR VIRTUELLE TOPOLOGIEN BEIM IP-ROUTING

APPAREIL ET PROCÉDÉS POUR TOPOLOGIES VIRTUELLES DANS LE ROUTAGE IP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2023 Bulletin 2023/03**

(73) Proprietor: **Huawei Technologies Co., Ltd.**
**Shenzhen, Guangdong 518129, (CN)**

(72) Inventors:
• **MARTIN, Sebastien**
 **80992 Munich (DE)**
• **LEGUAY, Jeremie**
 **80992 Munich (DE)**
• **CAI, Shengming**
 **80992 Munich (DE)**
• **HUIN, Nicolas**
 **80992 Munich (DE)**

(74) Representative: **Roth, Sebastian**
 **Mitscherlich PartmbB**
 **Karlstraße 7**
 **80333 München (DE)**

(56) References cited:
**EP-B1- 1 913 731**

• **GARDNER M TODD ET AL: "Using Multi-Topology Routing to improve routing during geographically correlated failures", 2014 10TH INTERNATIONAL CONFERENCE ON THE DESIGN OF RELIABLE COMMUNICATION NETWORKS (DRCN), IEEE, 1 April 2014 (2014-04-01), pages 1 - 8, XP032595646, DOI: 10.1109/DRCN.2014.6816134**
• **STEVEN S W LEE ET AL: "Link weight assignment and loop-free routing table update for link state routing protocols in energy-aware internet", FUTURE GENERATION COMPUTER SYSTEMS, ELSEVIER SCIENCE PUBLISHERS. AMSTERDAM, NL, vol. 28, no. 2, 7 May 2011 (2011-05-07), pages 437 - 445, XP028306109, ISSN: 0167-739X, [retrieved on 20110518], DOI: 10.1016/J.FUTURE.2011.05.003**

**Description**

<u>TECHNICAL FIELD</u>

The present disclosure relates to communication networks, and in particular to a method of operating a routing node, corresponding device configured to operate as the mentioned node, and a corresponding computer program.

<u>BACKGROUND</u>

In Internet Protocol (IP) networks, a routing of data packets typically involves an Interior Gateway Protocol (IGP) used for exchanging routing information between routing nodes (i.e., routers). In a popular link-state IGP known as Open Shortest Path First (OSPF), routers periodically share link metrics relating to their adjacent links with adjacent routers. In turn, the adjacent routers periodically share link metrics relating to their adjacent links and to the adjacent links of their adjacent routers, and so on. For reasons of efficiency, a plurality of link metrics shared with an adjacent router is aggregated into a Link State Advertisement (LSA) message. Upon reception of LSA messages, routers store their content in a Link State Database (LSDB) and process this information using a shortest path algorithm to maintain a Shortest Path Tree (SPT) towards all the other routers. As an outcome of this computation, a next hop router is identified for all possible destinations. This information is stored in a Forwarding Information Base (FIB) and used to forward packets.

Multi-Topology Routing (MTR) is an extension of IGP that has been devised to increase routing options, to support different application needs or to better load balance traffic in the network. MTR enables each router to execute multiple concurrent IGP instances, each one having its own IP prefixes, its own set of link states and its own topology as maintained in a separate Routing Information Base (RIB). MTR further enables each router to maintain its own Shortest-Path Tree (SPT) towards all destinations, from which a separate Forwarding Information Base (FIB) is derived. MTR allows the use of different shortest paths to consider different criteria (cost, hop, delay, ...). However, once chosen, a shortest path must be used end-to-end.

FlexAlgo is an extension of MTR that adds operator-defined routing algorithms, comprising an optimization objective (such as a minimization of a specified metric: IGP metric, delay metric, TE metric, ...) and constraints (such as an exclusion of certain link properties: link affinity, TE affinity, SRLG, ...). As an example, an operator-defined routing algorithm may mandate to "minimize delay metric and avoid link affinity 'blue'". Routers advertise FlexAlgo(s) they are participating in. Accordingly, there are more forwarding options than real topologies - more specifically, as many forwarding options as FlexAlgo(s) - but each FlexAlgo may use a single metric only.

Segment Routing (SR) can operate on top of IGP/MTR/FlexAlgo and leverages the source routing paradigm to steer a packet end-to-end through a network topology, using an ordered list of instructions called segments and represented by respective Segment Identifiers (SID). Each one of these instructions represents a function to be called at a specific location (i.e., router) in the network. In its simplest form, such a function may relate to moving forward in the ordered list of segments (i.e., forwarding the packet to the next hop router). SR enables concatenation of segments from different topologies at inflexion points as identified by the ordered list of segments. SR applied to the IPv6 data plane (SRv6) encodes the ordered list of segments as a stack of IPv6 addresses in a Segment Routing Header (SRH) (see RFC8754), i.e., in a particular IPv6 Routing Extension Header (see RFC8200). This requires one IPv6 address (128 bit) per inflexion point. Nonetheless, SR may not be available when lightweight Traffic Engineering (TE) with MTR/FlexAlgo is preferred.

While MTR/FlexAlgo provides a lightweight TE solution compared to Segment Routing (SR), it entails a linearly increasing signaling overhead as LSA messages are sent for each concurrent IGP instance. In addition, a packet routing is tied to only a few (generally 3 - 5) available IGP instances. Besides, a utilization of specific LSAs for each topology may affect convergence to a new stable routing state (i.e., a time to convergence of the LSDBs of all routers is increased). Indeed, LSA messages are used to update a topology every time a local modification appears to a link (e.g., modification of a link delay metric).

EP 1913731 B1 discloses multi-topology routing in multi-protocol label switching (MPLS) environments.

Gardner et al., "Using multi-topology routing to improve routing during geographically correlated failures" discloses a variation of multi-topology routing wherein certain virtual links of a respective virtual topology are effectively excluded from routing by high virtual link metrics.

Lee et al., "Link weight assignment and loop-free routing table update for link state routing protocols in energy-aware internet" discloses multi-period topology design and operation for IP networks, based on a single virtual topology at a time.

Accordingly, there is a need to improve a routing flexibility, a signaling overhead and a routing convergence in multi-topology routing.

## SUMMARY

This need is met by the embodiments defined in the enclosed independent claims. Advantageous implementations of the embodiments are further defined in the dependent claims.

The present disclosure provides the following advantages:

- virtual IGP topologies may be designed based on existing ones, and further user requirements in terms of QoS and protection may be taken into account,
- compact "lambda vectors" are communicated to each router to derive virtual topologies from the existing ones,
- the virtual topologies provide more routing flexibility than MTR,
- the virtual topologies do not entail any additional signaling overhead (they are silent, i.e. no link states or prefixes are exchanged between routers), and
- faster convergence (a stable routing state may be obtained more quickly).

It has to be noted that **all** devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF DRAWINGS

The above-described aspects and implementations will now be explained in relation to the enclosed drawings.

The features of these implementations may be combined with each other unless specified otherwise.

The drawings are to be regarded as being schematic representations, and elements illustrated in the drawings are not necessarily shown to scale. Rather, the various elements are represented such that their function and general purpose become apparent to those skilled in the art.

FIG. 1     illustrates a flow diagram of a method in accordance with the present disclosure of operating a routing node.

FIG. 2     illustrates a flow diagram of a method in accordance with the present disclosure of operating a network manager node.

FIG. 3     illustrates a device in accordance with the present disclosure configured to operate as a network manager node.

FIG. 4     illustrates a device in accordance with the present disclosure configured to operate as a routing node.

## DETAILED DESCRIPTION OF EMBODIMENTS

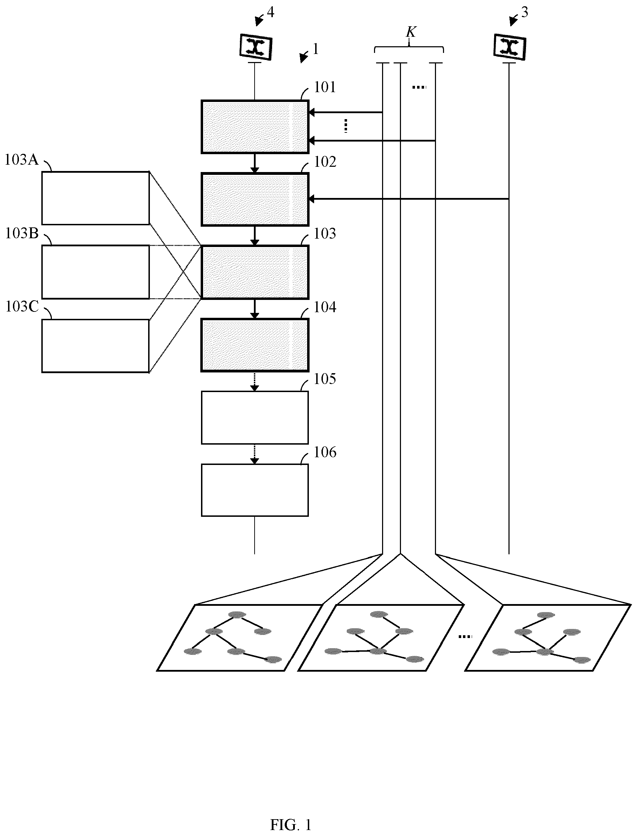

FIG. 1 illustrates a flow diagram of a method 1 in accordance with the present disclosure of operating a routing node.

The method 1 is for operating a routing node $v \in V$ in a network $G = (V, A)$ formed of a plurality of nodes V and a plurality of links (or edges or arcs) A and deploying an Interior Gateway Protocol (IGP).

A network as used herein may refer to a system comprising one or more nodes V interconnected by one or more links $A$ and thus forming a topology or graph $G$.

A node as used herein may refer to a cross-roads of a network.

A link (or edge, or arc) as used herein may refer to a communication medium through which nodes interconnected by the particular link may communicate.

The method 1 is represented as a sequence of steps in connection with a device 4 configured to operate as a routing node $v$. In other words, the device 4 is configured to perform the method 1 according to the present disclosure.

A routing node as used herein may refer to a node participating in an exchange of routing information in accordance with an IGP and making forwarding decisions.

An Interior Gateway Protocol (IGP) as used herein may refer to a communication protocol used for exchanging routing information between routing nodes under a same administrative authority.

A Link State advertisement (LSA) or IGP advertisement as used herein may refer to a particular message type used by an IGP for exchanging routing information between adjacent routing nodes.

To the right of the method 1, FIG. 1 further indicates a plurality K of IGP instances in the network G representing IGP instances provided by IGP/MTR and being in communication with the device 4. That is to say, the device 4, when operating as a routing node v, participates in routing in accordance with IGP/MTR. The plurality K of IGP instances advertises respective sets of IP prefixes, respective sets of link states $c_a^k$ and thus maintains respective topologies. FIG. 1 shows different exemplary topologies for $K=3$ indicated IGP instances.

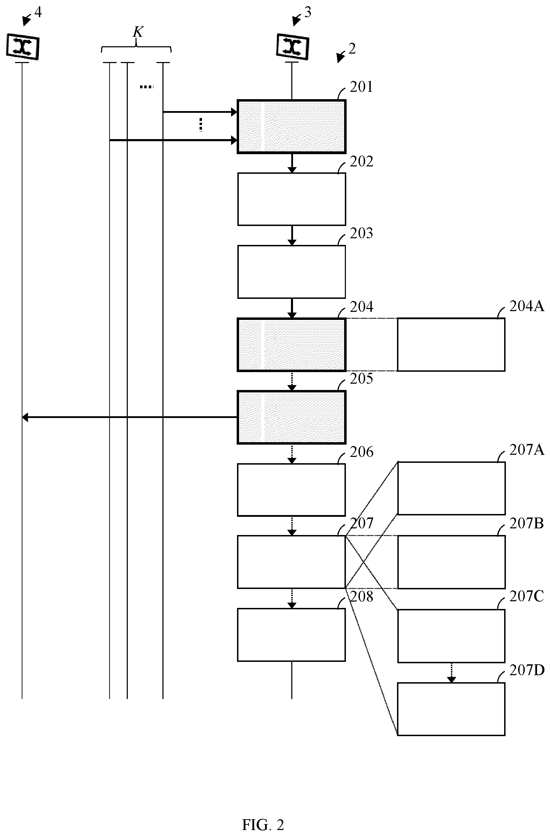

To the right of the plurality K of IGP instances, FIG. 1 further indicates a device 3 configured to operate as a network manager node m $\in V$. The device 3 is configured to perform a method 2 according to the present disclosure which is explained in more detail in connection with FIG. 2 below.

A network manager node as used herein may refer to a node making traffic engineering decisions.

Traffic Engineering (TE) as used herein may refer to assigning the services (i.e., traffic demands) of a network to particular routes through the network such that a network performance is optimized.

A service (i.e., demand, or traffic demand) as used herein may refer to a communications relation between endpoints of a network. Particular services may be associated with particular requirements in terms of Quality of Service (QoS), such as bandwidth/capacity, end-to-end delay, and/or protection against failures, such as end-to-end availability.

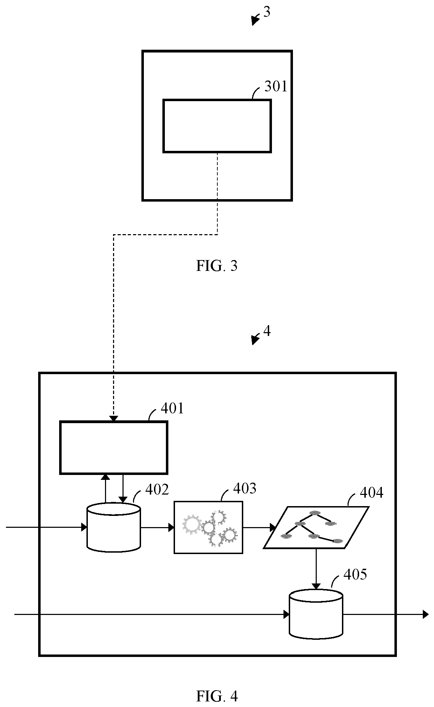

Turning to the actual flow diagram in FIG. 1, it may be appreciated that steps 101 - 104 are highlighted in grey to indicate that these are the basic steps to be performed by the virtual metric updater 401 of the device 4 (see FIG. 4) configured as the routing node v so as to generate virtual IGP topologies from actual IGP topologies. All other steps 105 - 106 are optional.

In a nutshell, the method 1 creates virtual IGP topologies from existing IGP topologies by applying multipliers to link metrics of existing IGP topologies and combining them linearly. For instance, a virtual IGP topology may be created from a delay topology and a hop count topology by creating virtual link metrics in accordance with 2 · delay + 3 · hop count. The multipliers 2 and 3 may be called "lambda multipliers", and collectively a "lambda vector". In this manner, each routing node updates its Link State Data Base and creates virtual link states/metrics from existing ones. For example, a lambda vector $\overline{\lambda}_n = (2, 3, 1)$ for $K=3$ topologies applied to a link having associated link cost/metrics $(10, 5, 7)$ yields a virtual link cost/metric of $\frac{10 \times 2 + 5 \times 3 + 7 \times 1}{3} = 14$. Once all the virtual links are created in the LSDB, the routing node applies a routing algorithm to obtain paths towards all destinations in the new virtual topology. To avoid routing loops, it may be required to ensure that the resulting virtual metrics are positive.

A link metric as used herein may refer to an administrative cost, such as price, delay, etc., associated with a particular link.

A virtual topology as used herein may refer to a topology formed by one or more nodes interconnected by one or more virtual links.

A virtual link as used herein may refer to a link having a virtual link metric.

A virtual link metric as used herein may refer to an administrative cost formed by combination of link metrics of one or more other links and associated with a particular virtual link.

The method 1 comprises a step of receiving 101 a plurality of IGP advertisements. Each of the plurality of received IGP advertisements comprises a (i.e., at least one) link metric $c_a^k$ of a respective one a $\in A$ of the plurality of links A of the network G in a respective one $k \in K$ of the plurality $K$ of IGP topologies in the network G. In other words, an IGP advertisement (or LSA message) may comprise the link metrics $c_a^k$ of one or more a $\in A$ of the plurality of links $A$ in a particular one $k \in K$ of the plurality $K$ of IGP topologies.

The method 1 further comprises a step of receiving 102 a number of (i.e., one or more) scalar vectors $\overline{\lambda}_n$. The number of received scalar vectors $\overline{\lambda}_n$ is associated with a corresponding number N of virtual IGP topologies in the network G. That is to say, each scalar vector $\overline{\lambda}_n$ provided relates to a corresponding virtual IGP topology. The number of received scalar vectors $\overline{\lambda}_n$ respectively comprises a plurality of scalar components $\lambda_n^k$ associated with the corresponding plurality K of IGP topologies in the network G. In other words, each scalar vector $\overline{\lambda}_n$ provided comprises a number of scalar components $\lambda_n^k$ in accordance with the plurality K of IGP topologies.

The method 1 further comprises a step of computing 103 a virtual link metric $c_a^{K+n}$ of a respective one a $\in A$ of the plurality of links A of the network G in a respective one n $\in N$ of the number $N$ of virtual IGP topologies in the network G.

On the one hand, the virtual link metric $c_a^{K+n}$ depends on the plurality $K$ of link metrics $c_a^k$ of the respective one $a \in A$ of the plurality of links A of the network G in the corresponding plurality K of IGP topologies in the network G. On the other hand, the virtual link metric $c_a^{K+n}$ depends on the scalar vector $\overline{\lambda}_n$ associated with the respective one n $\in N$ of the number N of virtual IGP topologies in the network G.

The computing 103 of the virtual link metric $c_a^{K+n}$ may be implemented in a number of alternative ways.

As a first alternative, the computing 103 of the virtual link metric $c_a^{K+n}$ may comprise a step of adding 103A the plurality $K$ of link metrics $c_a^k$ of the respective one $a \in A$ of the plurality of links A of the network G in the corresponding plurality K of IGP topologies in the network G respectively multiplied by the corresponding one of the plurality of scalar components $\lambda_n^k$ associated with the plurality K of IGP topologies in the network G. In other words, the resulting virtual link metric $c_a^{K+n}$ may be a sum of the link metrics $c_a^k$ multiplied by their corresponding scalar components $\lambda_n^k$ :

$$c_a^{K+n} = c_a^1 \lambda_n^1 + \ldots + c_a^k \lambda_n^k + \ldots + c_a^K \lambda_n^K,$$

Beyond multiplication, other algebraic operations can be used.

Thus, as a second alternative, the computing 103 of the virtual link metric $c_a^{K+n}$ may comprise a step of adding 103B the plurality $K$ of link metrics $c_a^k$ of the respective one $a \in A$ of the plurality of links A of the network G in the corresponding plurality K of IGP topologies in the network G respectively raised to the corresponding one of the plurality of scalar components $\lambda_n^k$ associated with the plurality K of IGP topologies in the network G. That is to say, the resulting virtual link metric $c_a^{K+n}$ may be a sum of the link metrics $c_a^k$ raised to their corresponding scalar components $\lambda_n^k$ :

$$c_a^{K+n} = c_a^{1^{\lambda_n^1}} + \ldots + c_a^{k^{\lambda_n^k}} + \ldots + c_a^{K^{\lambda_n^K}}$$

As a third alternative, the computing 103 of the virtual link metric $c_a^{K+n}$ may comprise a step of adding 103C the plurality $K$ of link metrics $c_a^k$ of the respective one $a \in A$ of the plurality of links A of the network G in the corresponding plurality K of IGP topologies in the network G and the corresponding one of the plurality of scalar components $\lambda_n^k$ associated with the plurality K of IGP topologies in the network G. In other terms, the resulting virtual link metric $c_a^{K+n}$ may simply be a sum of the link metrics $c_a^k$ and their corresponding scalar components $\lambda_n^k$ :

$$c_a^{K+n} = c_a^1 + \lambda_n^1 + \ldots + c_a^k + \lambda_n^k + \ldots + c_a^K + \lambda_n^K$$

The method 1 further comprises a step of computing 104 a tree $T_v^{K+n}$ covering the respective one n $\in N$ of the number $N$ of virtual IGP topologies.

In particular, the tree $T_v^{K+n}$ may comprise a shortest path tree rooted in the routing node *v*.

From the tree $T_v^{K+n}$ covering the respective one n $\in N$ of the number $N$ of virtual IGP topologies, a FIB may be derived for forwarding within the particular virtual IGP topology. This is no different than deriving FIBs for forwarding within respective existing IGP/MTR topologies.

In summary, the above-described method 1 generates virtual IGP topologies as described by virtual link metrics $c_a^{K+n}$ based on actual IGP topologies as described by their respective link metrics $c_a^k$ and on scalar components $\lambda_n^k$ . As will be explained in more detail in connection with FIG. 2, the scalar components $\lambda_n^k$ are provided by a virtual metric designer 301 of the device 3 configured to operate as the network manager node m $\in V$.

Evidently, the computed virtual IGP topologies are accurate as long as the underlying link metrics $c_a^k$ and scalar vectors $\overline{\lambda}_n$ remain unchanged. However, once the routing information $c_a^k$ changes, this is re-advertised within the network G. Upon reception of an updated link metric $c_a^k$ , the affected virtual link metrics $c_a^{K+n}$ may need to be recomputed. The same applies if the afore-mentioned virtual metric designer 301 provides updated scalar vectors $\overline{\lambda}_n$.

As such, the virtual metric updater 401 of a respective device 4 is in charge of updating the LSDB when a new scalar vector $\overline{\lambda}_n$ is received from the virtual metric designer 301 of the device 3 or when link metrics of an existing IGP/MTR topology change.

As virtual IGP topologies are based on existing IGP/MTR topologies, no specific LSAs need to be advertised, so that the virtual IGP topologies may be called silent topologies. A virtual IGP topology may be available almost immediately once the corresponding lambda vector is received by the involved routing nodes. When a metric in an existing IGP/MTR topology is updated, all the virtual metrics and shortest path trees based on this metric are updated locally by the routing nodes.

Accordingly, the method 1 may further comprise: triggering the computing 103 of the virtual link metric $c_a^{K+n}$ responsive to receiving an updated one of the number of scalar vectors $\overline{\lambda}_n$ associated with the corresponding number $N$ of virtual IGP topologies in the network G, and/or triggering the computing 103 of the virtual link metric $c_a^{K+n}$ responsive to receiving an IGP advertisement comprising an updated link metric $c_a^k$ of a respective one $a \in A$ of the plurality of links A of the network G in a respective one $k \in K$ of the plurality $K$ of IGP topologies in the network G.

In the data plane, each IGP/MTR topology has its own FIB, as already mentioned. The same applies to virtual IGP topologies once they are computed. IP forwarding over a specific tree (topology) may be achieved by mapping traffic to the specific tree (topology). This may be realized by furnishing the individual packets forming the traffic with relevant mapping information.

The method 1 may thus further comprise: receiving 105 a locator information associated with a respective one i of the number of services $(s_i, d_i)$ to the routing node $v \in V$ of the network G; and forwarding 106, based on the received locator information, the respective one $i$ of the number of services $(s_i, d_i)$ over a respective one of the plurality $N$ of virtual IGP topologies in the network G.

More specifically, the mapping of packets to virtual IGP topologies may be implemented in a number of alternative ways.

As a first alternative, the locator information may comprise a DSCP/ToS field in an IP packet header.

A Differentiated Services Code Point (DSCP) / Type of Service (ToS) field as used herein may refer to a particular bit field in an IPv4 packet header.

The solution may also be used with Segment Routing when a new SRv6 locator specifies which virtual IGP topology should be used at each segment (SR extension).

Thus, as a second alternative, the locator information may comprise a locator field in an SRv6 packet header. In SRv6, each packet comprises one or more Segment Identifiers (SID), and each SID in turn comprises function information (which points to any possible function, such as moving forward in the ordered list of segments), locator information (which identifies the router performing the function), and argument information (i.e., immutable parameters passed to the function). Within this locator information, a number of bits ("Topology ID") may be designated to identify at the router specified by the locator information which topology needs to be used for forwarding the particular packet.

FIG. 2 illustrates a flow diagram of a method 2 in accordance with the present disclosure of operating a network manager node.

The method 2 is for operating a network manager node $m \in V$ in a network $G = (V, A)$ formed of a plurality of nodes V and a plurality of links (or edges or arcs) A and deploying an Interior Gateway Protocol (IGP).

The method 2 is represented as a sequence of steps in connection with a device 3 configured to operate as a network manager node m. In other words, the device 3 is configured to perform the method 2 according to the present disclosure.

To the left of the method 2, FIG. 2 further indicates the plurality K of IGP instances in the network G already introduced in connection with FIG. 1. The plurality K of IGP instances represents IGP instances provided by IGP/MTR and being in communication with the device 3. That is to say, the device 3, when operating as a network manager node m, participates in routing in accordance with IGP/MTR. The plurality K of IGP instances advertises respective sets of IP prefixes, respective sets of link states $c_a^k$ and thus maintains respective topologies. FIG. 1 shows different exemplary topologies for $K=3$ indicated IGP instances.

To the left of the plurality K of IGP instances, FIG. 2 further indicates the device 4 configured to operate as a network manager node $m \in V$ already introduced and explained in more detail in connection with FIG. 1.

Turning to the actual flow diagram in FIG. 2, it may be appreciated that steps 201, 204 and 205 are highlighted in grey to indicate that these are the basic steps to be performed by the virtual metric designer 301 of the device 3 (see FIG. 3) configured as the network manager node m so as to generate scalar vectors $\overline{\lambda}_n$ for generating virtual IGP topologies from actual IGP topologies. All other steps 202 - 203 and 206 - 208 are optional.

In a nutshell, to create and manage virtual IGP topologies, the virtual metric designer 301 residing in a device 3 configured as the network manager node m or in the network management system (NMS) takes as input a network topology and the link metrics used by the existing IGP topologies. Based on this, the virtual metric designer 301 may calculate lambda multipliers and transmit them to devices 3 configured as routing nodes *v.*

The method 2 comprises a step of receiving 201 a plurality of IGP advertisements respectively comprising a link metric $c_a^k$ of a respective one $a \in A$ of a plurality of links A of the network G in a respective one $k \in K$ of a plurality $K$ of IGP topologies in the network G. This corresponds to the step of receiving 101 of the method 1.

The method 2 further comprises a step of computing 204 a number of (i.e., one or more) scalar vectors $\overline{\lambda}_n$. The number of computed scalar vectors $\overline{\lambda}_n$ is associated with a corresponding number N of virtual IGP topologies in the network *G.* That is to say, each scalar vector $\overline{\lambda}_n$ provided relates to a corresponding virtual IGP topology. Each of the number of computed scalar vectors $\overline{\lambda}_n$ comprises a plurality of scalar components $\lambda_n^k$ associated with the corresponding plurality K of IGP topologies in the network G. In other words, each scalar vector $\overline{\lambda}_n$ provided comprises a number of scalar components $\lambda_n^k$ in accordance with the plurality K of IGP topologies.

To create a set of virtual IGP topologies based on a diverse set of scalar vectors $\overline{\lambda}_n$, the following exemplary

algorithm based on permutations may be used. Its general idea is to begin with a uniform scalar vector $\overline{\lambda}_n$ (having components of value 1) and generate N virtual metrics by adding 1 sequentially to each position of the vector and avoiding those vectors where all component values are equals. This procedure generates enough diversity according to the number of virtual topologies for any possible traffic matrices.

```
PM            //set of physical metrics
VM←{}         // set of virtual metrics
N             // the number of desired virtual metrics


LambdaVector ←{1,...,1}
CurrentIndexMax ← 0


add LambdaVector in VM


i ← 1
while i < N do
        If all elements of LambdaVector are CurrentIndexMax then
                CurrentIndexMax ← CurrentIndexMax +1
        j ← |PM|-1
        while j>=0 do
                if LambdaVector [j] != CurrentIndexMax then
                        LambdaVector [j] ← CurrentIndexMax
                        Break
                else
                        LambdaVector [j] ← CurrentIndexMax - 1
                j ← j-1
        if all elements of LambdaVector are not equal then
                add LambdaVector in VM
                i ← i+1
```

It will be appreciated that if the design of virtual metrics should take into account protection, load balancing and SLA requirements, the algorithm needs information about the traffic matrix with SLA requirements per service.

The method 2 further comprises a step of sending 205 the number of scalar vectors $\overline{\lambda}_n$ to at least one routing node $v \in V$ of the network G. This corresponds to the step of receiving 102 of the method 1.

In case existing IGP instances are not a good base, then existing IGP instances may be modified and/or new IGP instances may be added (smallest as possible).

Thus, the method 2 may further comprise adding 202 one or more IGP topologies to the plurality K of IGP topologies in the network G, and/or modifying 203 one or more of the plurality K of IGP topologies in the network G.

A design of scalar vectors (i.e., virtual link metrics) may take into account SRLG failures.

A Shared Risk Link Group (SLRG) as used herein may refer to a set of network resources (here: links) which share a risk of suffering from a common failure. For example, a plurality of communication lines crossing a river via a same bridge share a risk of suffering from the common failure of breakdown of the bridge.

As such, the computing 204 the number of scalar vectors $\overline{\lambda}_n$ may comprise: computing 204A the number of scalar vectors $\overline{\lambda}_n$ in accordance with a number of SLRG constraints respectively associated with a subset of the plurality of links A of the network G.

In case a traffic matrix is provided to the virtual metric designer 301, it can either assign/map services to created virtual IGP topologies or jointly optimize the creation of virtual topologies and the assignment.

To assign/map services to a virtual IGP topology, the following mathematical model may be solved using mathematical programming.

$x_k^{mst} \in \{0, 1\}$ : equals to 1 if the demand k is assigned to the minimum spanning tree *mst,* 0 otherwise.

$$\min \sum_{k \in K} \sum_{mst \in MST} c_k^{mst} x_k^{mst}$$

$$\sum_{mst \in MST} x_k^{mst} = 1 \qquad\qquad \forall k \in K$$

$$\sum_{k \in K} \sum_{mst \in MST : e \in SP_{mst}(k)} b_k x_k^{mst} \le c_e \qquad\qquad \forall e \in E$$

$$x_k^{mst} \in \{0, 1\} \qquad\qquad \forall mst \in MST \forall e \in E$$

In this model, the objective function minimizes a cost induced by each assignment. If a shortest-path tree is invalid (according to an SLA requirement) for a demand then the associated cost is set to a large value (as a penalty). The constraints ensure that a demand can be assigned to only one shortest-path tree and the link capacity is respected for each link.

Fault protection mechanisms compatible with IGP/MTR topologies may also be deployed in connection with virtual IGP topologies.

As such, the method 2 may further comprise: receiving 206 a traffic matrix defining a number of services $(s_i, d_i)$ between respective source and destination nodes $s_i, d_i \in V$ of the network G; and mapping 207 each i of the number of services $(s_i, d_i)$ to a respective one of the plurality $K + N$ of IGP topologies or virtual IGP topologies in the network G in accordance with the traffic matrix.

As a first fault protection example, the mapping 207 of each i of the number of services $(s_i, d_i)$ may comprise: duplicating 207A a respective one i of the number of services $(s_i, d_i)$; and mapping 207B each $i_1, i_2$ of the duplicate services $(s_i, d_i)$ to disjoint ones of the plurality $K + N$ of IGP topologies or virtual IGP topologies in the network G in accordance with a FRER scheme.

This implements 1+1 protection by duplicating the traffic with FRER over two disjoint shortest-path trees (existing or virtual).

Frame Replication and Elimination for Reliability (FRER) as used herein may refer to an arrangement of two nodes of a network involving an exchange of duplicate traffic between the nodes on disjoint routes.

As a second fault protection example, the mapping 207 of each i of the number of services $(s_i, d_i)$ may comprise: mapping 207C a respective one i of the number of services $(s_i, d_i)$ to an operative one of the plurality $K + N$ of IGP topologies or virtual IGP topologies in the network G in accordance with a LFA FRR scheme.

This implements a failover by rerouting traffic on another tree (existing or virtual) until convergence, similar to LFA.

Loop-Free Alternate (LFA) as used herein may refer to an arrangement (see RFC 5286) that allows a router whose local link has failed to forward traffic via a pre-computed alternate next-hop routing node until the IGP has recomputed new primary next-hop routing nodes for all affected IP prefixes.

Fast Reroute (FRR) as used herein may refer to a framework (see RFC5714) that provides protection against link or node failure by invoking locally determined repair paths.

In order to provide a FRR mechanism with SR in case of failure, the Maximally Redundant Trees (MRT) extension has been proposed. Routers create for each destination two shortest path trees called MRT-Blue and MRT-Red. The two shortest path trees can be computed in $O(e + n \log n)$. MRT-FRR may be realized by using multi-topology (MT) forwarding. There is an MRT-Blue forwarding topology and an MRT-Red forwarding topology. The MRTs are computed locally without exchanging link metrics.

This may be applied to virtual IGP topologies by tailoring the virtual topologies for FRR and hard-coding the algorithm into the routers. This offers more flexibility by building a number of silent virtual topologies, not limited to 2, which can be used for various purposes (such as meeting SLAs. load balancing traffic, protecting against failures, etc...) and which may be updated dynamically.

As a third fault protection example, the mapping 207 of each i of the number of services $(s_i, d_i)$ may comprise: mapping 207D a respective one i of the number of services $(s_i, d_i)$ to disjoint ones of the plurality $K + N$ of IGP topologies or virtual IGP topologies in the network G in accordance with a load balancing scheme.

This implements a load balancing of traffic over multiple shortest-path trees (existing or virtual).

Load balancing as used herein may refer to an arrangement between two nodes of a network involving a concurrent exchange of traffic on a plurality of disjoint routes.

In case a traffic matrix with a list of services and their attributes in terms of source, destination, protection requirements (e.g., list of SRLGs), QoS requirements (e.g. bandwidth, end-to-end latency, loss) is provided, the virtual metric designer 301 may output, in addition to the scalar vectors, a mapping of the different services to the different topologies (existing or virtual). This information may be used to classify traffic and route services using the appropriate topology (i.e., FIB).

As such, the mapping 207 of each i of the number of services ($s_i$, $d_i$) may further comprise: sending 208 a locator information associated with a respective one i of the number of services ($s_i$, $d_i$) to the routing node $v \in V$ of the network G for indicating a forwarding of the respective one i of the number of services ($s_i$, $d_i$) over a respective one of the plurality N of virtual IGP topologies in the network G via the routing node $v \in V$ of the network G.

The locator information may comprise a DSCP/ToS field in an IP packet header, or a locator field in an SRv6 packet header.

FIG. 3 illustrates a device 3 in accordance with the present disclosure configured to operate as a network manager *node m E V.*

The network manager node m is a node of the network G deploying an IGP.

The device 3 comprises a virtual metric designer 301 and is configured to perform the method 2 according to the present disclosure or any of its implementations. In particular, the virtual metric designer 301 is configured to send 205 a number of scalar vectors $\overline{\lambda}_n$ to at least one device 4 configured to operate as a routing node $v \in V$ of the network *G.*

FIG. 4 illustrates such a device 4 in accordance with the present disclosure that is configured to operate as a routing *node v E V.*

The routing node *v* is a node of a network G deploying an IGP. The device 4 comprises a virtual metric updater 401 and is configured to perform the method 1 according to the present disclosure or any of its implementations.

The device 4 may further comprise a LSDB 402, in which the device 4 may store link metrics when receiving LSA messages (indicated by an arrow approaching the LSDB 402 from the left in FIG. 4) from the plurality K of IGP topologies in the network G.

In addition, the virtual metric updater 401 may compute 103 and store virtual link metrics for a number N of virtual IGP topologies in the network G when receiving 102 a corresponding number of scalar vectors $\overline{\lambda}_n$ as mentioned in connection with FIG. 3 above (indicated by an arrow approaching the virtual metric updater 401 from above in FIG. 4).

The device 4 may further comprise a processing entity 403 configured to execute a shortest path algorithm based on the (virtual) link metrics stored in the LDSB 402, in order to obtain an SPT 404 towards all the routing nodes in the respective (virtual) IGP topology. As an outcome of this computation, a next hop router is identified for all possible destinations. This information is stored in a FIB 405 and used to forward incoming packets (indicated by an arrow approaching the FIB 405 from the left in FIG. 4).

The respective device 3, 4 may comprise a processor or processing circuitry (not shown) configured to perform, conduct or initiate the various operations of the respectively corresponding method 2, 1 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors.

The respective device 3, 4 may further comprise memory circuitry (not shown) configured to store one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the respectively corresponding method 2, 1 to be performed.

In an implementation, the processing circuitry may comprise one or more processors and a non-transitory memory connected to the one or more processors. The non-transitory memory may carry executable program code which, when executed by the one or more processors, causes the respective device 3, 4 to perform, conduct or initiate the operations or methods described herein.

The present disclosure has been described in conjunction with various embodiments as examples as well as implementations. However, other variations can be understood and effected by those persons skilled in the art and practicing the claimed subject-matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

The method 2 further comprises a step of sending 205 the number of scalar vectors $\overline{\lambda}_n$ to at least one routing node $v \in V$ of the network G. This corresponds to the step of receiving 102 of the method 1.

In case existing IGP instances are not a good base, then existing IGP instances may be modified and/or new IGP instances may be added (smallest as possible).

Thus, the method 2 may further comprise adding 202 one or more IGP topologies to the plurality K of IGP topologies in the network G, and/or modifying 203 one or more of the plurality K of IGP topologies in the network G.

A design of scalar vectors (i.e., virtual link metrics) may take into account SRLG failures.

A Shared Risk Link Group (SLRG) as used herein may refer to a set of network resources (here: links) which share a risk of suffering from a common failure. For example, a plurality of communication lines crossing a river via a same bridge share a risk of suffering from the common failure of breakdown of the bridge.

As such, the computing 204 the number of scalar vectors $\overline{\lambda}_n$ may comprise: computing 204A the number of scalar vectors $\overline{\lambda}_n$ in accordance with a number of SLRG constraints respectively associated with a subset of the plurality of links $A$ of the network G.

In case a traffic matrix is provided to the virtual metric designer 301, it can either assign/map services to created virtual IGP topologies or jointly optimize the creation of virtual topologies and the assignment.

To assign/map services to a virtual IGP topology, the following mathematical model may be solved using mathematical programming.

$x_k^{mst} \in \{0, 1\}$ : equals to 1 if the demand $k$ is assigned to the minimum spanning tree $mst$, 0 otherwise.

$$\min \quad \sum_{k \in K} \sum_{mst \in MST} c_k^{mst} x_k^{mst}$$

$$\sum_{mst \in MST} x_k^{mst} = 1 \qquad\qquad \forall k \in K$$

$$\sum_{k \in K} \sum_{mst \in MST: e \in SP_{mst}(k)} b_k x_k^{mst} \leq c_e \qquad\qquad \forall e \in E$$

$$x_k^{mst} \in \{0, 1\} \qquad\qquad \forall mst \in MST \forall e \in E$$

In this model, the objective function minimizes a cost induced by each assignment. If a shortest-path tree is invalid (according to an SLA requirement) for a demand then the associated cost is set to a large value (as a penalty). The constraints ensure that a demand can be assigned to only one shortest-path tree and the link capacity is respected for each link.

Fault protection mechanisms compatible with IGP/MTR topologies may also be deployed in connection with virtual IGP topologies.

As such, the method 2 may further comprise: receiving 206 a traffic matrix defining a number of services $(s_i, d_i)$ between respective source and destination nodes $s_i, d_i \in V$ of the network G; and mapping 207 each $i$ of the number of services $(s_i, d_i)$ to a respective one of the plurality $K + N$ of IGP topologies or virtual IGP topologies in the network G in accordance with the traffic matrix.

As a first fault protection example, the mapping 207 of each i of the number of services $(s_i, d_i)$ may comprise: duplicating 207A a respective one $i$ of the number of services $(s_i, d_i)$; $i_1, i_2$ of the duplicate services $(s_i, d_i)$ to disjoint ones of the plurality $K + N$ of IGP topologies or virtual IGP topologies in the network G in accordance with a FRER scheme.

This implements 1+1 protection by duplicating the traffic with FRER over two disjoint shortest-path trees (existing or virtual).

Frame Replication and Elimination for Reliability (FRER) as used herein may refer to an arrangement of two nodes of a network involving an exchange of duplicate traffic between the nodes on disjoint routes.

As a second fault protection example, the mapping 207 of each i of the number of services $(s_i, d_i)$ may comprise: mapping 207C a respective one $i$ of the number of services $(s_i, d_i)$ to an operative one of the plurality $K + N$ of IGP topologies or virtual IGP topologies in the network G in accordance with a LFA FRR scheme.

This implements a failover by rerouting traffic on another tree (existing or virtual) until convergence, similar to LFA.

Loop-Free Alternate (LFA) as used herein may refer to an arrangement (see RFC 5286) that allows a router whose local link has failed to forward traffic via a pre-computed alternate next-hop routing node until the IGP has recomputed new primary next-hop routing nodes for all affected IP prefixes.

Fast Reroute (FRR) as used herein may refer to a framework (see RFC5714) that provides protection against link or node failure by invoking locally determined repair paths.

In order to provide a FRR mechanism with SR in case of failure, the Maximally Redundant Trees (MRT) extension has been proposed. Routers create for each destination two shortest path trees called MRT-Blue and MRT-Red. The two shortest path trees can be computed in $O(e + n \log n)$. MRT-FRR may be realized by using multi-topology (MT) forwarding. There is an MRT-Blue forwarding topology and an MRT-Red forwarding topology. The MRTs are computed locally without exchanging link metrics.

This may be applied to virtual IGP topologies by tailoring the virtual topologies for FRR and hard-coding the algorithm into the routers. This offers more flexibility by building a number of silent virtual topologies, not limited to 2, which can be used for various purposes (such as meeting SLAs, load balancing traffic, protecting against failures, etc...) and which may be updated dynamically.

As a third fault protection example, the mapping 207 of each i of the number of services ($s_i$, $d_i$) may comprise: mapping 207D a respective one $i$ of the number of services ($s_i$, $d_i$) to disjoint ones of the plurality $K + N$ of IGP topologies or virtual IGP topologies in the network G in accordance with a load balancing scheme.

This implements a load balancing of traffic over multiple shortest-path trees (existing or virtual).

Load balancing as used herein may refer to an arrangement between two nodes of a network involving a concurrent exchange of traffic on a plurality of disjoint routes.

In case a traffic matrix with a list of services and their attributes in terms of source, destination, protection requirements (e.g., list of SRLGs), QoS requirements (e.g. bandwidth, end-to-end latency, loss) is provided, the virtual metric designer 301 may output, in addition to the scalar vectors, a mapping of the different services to the different topologies (existing or virtual). This information may be used to classify traffic and route services using the appropriate topology (i.e., FIB).

As such, the mapping 207 of each $i$ of the number of services ($s_i$, $d_i$) may further comprise: sending 208 a locator information associated with a respective one i of the number of services ($s_i$, $d_i$) to the routing node v $\in$ V of the network G for indicating a forwarding of the respective one $i$ of the number of services ($s_i$, $d_i$) over a respective one of the plurality N of virtual IGP topologies in the network G via the routing node v $\in$ V *of* the network G.

The locator information may comprise a DSCP/ToS field in an IP packet header, or a locator field in an SRv6 packet header.

FIG. 3 illustrates a device 3 in accordance with the present disclosure configured to operate as a network manager node m $\in$ V.

The network manager node m is a node of the network G deploying an IGP.

The device 3 comprises a virtual metric designer 301 and is configured to perform the method 2 according to the present disclosure or any of its implementations. In particular, the virtual metric designer 301 is configured to send 205 a number of scalar vectors $\overline{\lambda}_n$ to at least one device 4 configured to operate as a routing node $v \in V$ of the network G.

FIG. 4 illustrates such a device 4 in accordance with the present disclosure that is configured to operate as a routing node v $\in$ V.

The routing node v is a node of a network G deploying an IGP. The device 4 comprises a virtual metric updater 401 and is configured to perform the method 1 according to the present disclosure or any of its implementations.

The device 4 may further comprise a LSDB 402, in which the device 4 may store link metrics when receiving LSA messages (indicated by an arrow approaching the LSDB 402 from the left in FIG. 4) from the plurality K of IGP topologies in the network G.

In addition, the virtual metric updater 401 may compute 103 and store virtual link metrics for a number N of virtual IGP topologies in the network G when receiving 102 a corresponding number of scalar vectors $\overline{\lambda}_n$ as mentioned in connection with FIG. 3 above (indicated by an arrow approaching the virtual metric updater 401 from above in FIG. 4).

The device 4 may further comprise a processing entity 403 configured to execute a shortest path algorithm based on the (virtual) link metrics stored in the LDSB 402, in order to obtain an SPT 404 towards all the routing nodes in the respective (virtual) IGP topology. As an outcome of this computation, a next hop router is identified for all possible destinations. This information is stored in a FIB 405 and used to forward incoming packets (indicated by an arrow approaching the FIB 405 from the left in FIG. 4).

The respective device 3, 4 may comprise a processor or processing circuitry (not shown) configured to perform, conduct or initiate the various operations of the respectively corresponding method 2, 1 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors.

The respective device 3, 4 may further comprise memory circuitry (not shown) configured to store one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the respectively corresponding method 2, 1 to be performed.

In an implementation, the processing circuitry may comprise one or more processors and a non-transitory memory connected to the one or more processors. The non-transitory memory may carry executable program code which, when executed by the one or more processors, causes the respective device 3, 4 to perform, conduct or initiate the operations or methods described herein.

The present disclosure has been described in conjunction with various embodiments as examples as well as implementations. However, other variations can be understood and effected by those persons skilled in the art and practicing the claimed subject-matter, from the studies of the drawings, this disclosure and the independent claims.

**Claims**

1. A method (1) of operating a routing node, $v \in V$, in a Multi-Topology Routing, MTR network, G = *(V, A)*, deploying an Interior Gateway routing Protocol, IGP, the method (1) comprising

   receiving (101) a plurality of IGP advertisements respectively comprising a link metric, $c_a^k$, of a respective one, *a* $\in A$, of a plurality of links, *A,* of the MTR network, G, in a respective one, $k \in K$, of a plurality, K, of IGP topologies in the MTR network, G;
   receiving (102) a number of scalar vectors, $\overline{\lambda}_n$, associated with a corresponding number, N, of virtual IGP topologies in the MTR network, G, and respectively comprising a plurality of scalar components, $\lambda_n^k$, associated with the corresponding plurality, K, of IGP topologies in the MTR network, G;
   computing (103) a virtual link metric, $c_a^{K+n}$, of a respective one, $a \in A$, of the plurality of links, *A,* of the MTR network, G, in a respective one, $n \in N$, of the number, *N,* of virtual IGP topologies in the MTR network, G, in dependence of the plurality, K, of link metrics, $c_a^k$, of the respective one, $a \in A$, of the plurality of links, *A,* of the MTR network, G, in the corresponding plurality, K, of IGP topologies in the MTR network, G, and the scalar vector, $\overline{\lambda}_n$, associated with the respective one, $n \in N$, of the number, *N,* of virtual IGP topologies in the MTR network, G; and

   computing (104) a tree, $T_v^{K+n}$, covering the respective one, $n \in N$, of the number, *N,* of virtual IGP topologies, wherein the tree comprises a shortest path tree, SPT, rooted in the routing node, $v \in V$, and the SPT is obtained by executing a shortest path algorithm based on the virtual link metrics, $c_a^{K+n}$.

2. The method (1) of claim 1, the computing (103) of the virtual link metric, $c_a^{K+n}$, comprising

   adding (103A) the plurality, K, of link metrics, $c_a^k$, of the respective one, $a \in A$, of the plurality of links, A, of the MTR network, G, in the corresponding plurality, K, of IGP topologies in the MTR network, G, respectively multiplied by the corresponding one of the plurality of scalar components, $\lambda_n^k$, associated with the plurality, K, of IGP topologies in the network, G, or
   adding (103B) the plurality, K, of link metrics, $c_a^k$, of the respective one, $a \in A$, of the plurality of links, A, of the MTR network, G, in the corresponding plurality, K, of IGP topologies in the MTR network, G, respectively raised to the corresponding one of the plurality of scalar components, $\lambda_n^k$, associated with the plurality, K, of IGP topologies in the MTR network, G, or
   adding (103C) the plurality, *K,* of link metrics, $c_a^k$, of the respective one, $a \in A$, of the plurality of links, A, of the MTR network, G, in the corresponding plurality, K, of IGP topologies in the MTR network, G, and the corresponding one of the plurality of scalar components, $\lambda_n^k$, associated with the plurality, K, of IGP topologies in the MTR network, G.

3. The method (1) of claim 1 or claim 2, further comprising
   responsive to receiving an updated one of the number of scalar vectors, $\overline{\lambda}_n$, associated with the corresponding number, N, of virtual IGP topologies in the MTR network, G, triggering the computing (103) of the virtual link metric, $c_a^{K+n}$.

4. The method (1) of any of the preceding claims, further comprising
   responsive to receiving an IGP advertisement comprising an updated link metric, $c_a^k$, of a respective one, a $\in A$, of the plurality of links, *A,* of the MTR network, G, in a respective one, $k \in K$, of the plurality, *K,* of IGP topologies in the MTR network, G, triggering the computing (103) of the virtual link metric, $c_a^{K+n}$.

5. The method (1) of any of the preceding claims, further comprising

   receiving (105) a locator information associated with a respective one, i, of a number of services ($s_i$, $d_i$) to the routing node, $v \in V$, of the MTR network, G; and

forwarding (106), based on the received locator information, the respective one, *i*, of the number of services ($s_i$, $d_i$) over a respective one of the plurality, N, of virtual IGP topologies in the MTR network, G.

6. The method (1) of claim 5,

the locator information comprising a DSCP/ToS field in an IP packet header, or
the locator information comprising a locator field in an SRv6 packet header.

7. The method (1) of any of the preceding claims, further comprising a supportive method (2) of operating a network manager node, $m \in V$, configured to support the routing node, $v \in V$, also in the MTR network, G = *(V, A)*, deploying the IGP, the supportive method (2) comprising

receiving (201) a plurality of IGP advertisements respectively comprising a link metric, $c_a^k$, of a respective one, $a \in A$, of a plurality of links, A, of the MTR network, G, in a respective one, $k \in K$, of a plurality, K, of IGP topologies in the MTR network, G;
computing (204) a number of scalar vectors, $\overline{\lambda}_n$, associated with a corresponding number, N, of virtual IGP topologies in the MTR network, G, and respectively comprising a plurality of scalar components, $\lambda_n^k$, associated with the corresponding plurality, K, of IGP topologies in the MTR network, G; and
sending (205) the number of scalar vectors, $\overline{\lambda}_n$, to at least one routing node, $v \in V$, of the MTR network, *G*.

8. The supportive method (2) of claim 7, further comprising

adding (202) one or more IGP topologies to the plurality, K, of IGP topologies in the MTR network, G; and/or
modifying (203) one or more of the plurality, K, of IGP topologies in the MTR network, G.

9. The supportive method (2) of claim 7 or claim 8, the computing (204) the number of scalar vectors, $\overline{\lambda}_n$, comprising computing (204A) the number of scalar vectors. $\overline{\lambda}_n$, in accordance with a number of Shared Risk Link Group, SLRG, constraints respectively associated with a subset of the plurality of links, A, of the MTR network, G.

10. The supportive method (2) of any one of the claims 7 to 9, further comprising

receiving (206) a traffic matrix defining a number of services ($s_i$, $d_i$) between respective source and destination nodes, $s_i$, $d_i \in V$, of the MTR network, G; and
mapping (207) each, *i*, of the number of services ($s_i$, $d_i$) to a respective one of the plurality, K + N, of IGP topologies or virtual IGP topologies in the MTR network, G, in accordance with the traffic matrix.

11. The supportive method (2) of claim 10, the mapping (207) of each, i, of the number of services ($s_i$, $d_i$) comprising

duplicating (207A) a respective one, i, of the number of services ($s_i$, $d_i$); and
mapping (207B) each, $i_1$, $i_2$, of the duplicate services ($s_i$, $d_i$) to disjoint ones of the plurality, K + N, of IGP topologies or virtual IGP topologies in the MTR network, G, in accordance with a Frame Replication and Elimination for Reliability, FRER, scheme.

12. The supportive method (2) of claim 10 or claim 11, the mapping (207) of each, i, of the number of services ($s_i$, $d_i$) comprising

mapping (207C) a respective one, i, of the number of services ($s_i$, $d_i$) to an operative one of the plurality, K + N, of IGP topologies or virtual IGP topologies in the MTR network, G, in accordance with a Loop-Free Alternate, LFA, Fast Reroute, FRR, scheme; and/or
mapping (207D) a respective one, i, of the number of services ($s_i$, $d_i$) to disjoint ones of the plurality, K + N, of IGP topologies or virtual IGP topologies in the MTR network, G, in accordance with a load balancing scheme.

13. A device (3, 4) configured to operate as a routing node, $v \in V$, or a network manager node, $m \in V$, of a network, G = *(V, A)*, deploying an IGP, the device (3, 4) comprising

a virtual metric updater (301) configured to perform the method (1) of one of the claims 1 to 6, if the device (3) is configured to operate as the routing node; and optionally

a virtual metric designer (401) configured to perform the supportive method (2) of one of the claims 7 to 12, if the device (4) is configured to operate as the network manager.

14. A computer program, comprising
executable instructions which, when executed by a processor, cause the processor to perform the method (1) of one of the claims 1 to 6 and optionally the supportive method (2) of one of the claims 7 to 12.

**Patentansprüche**

1. Verfahren (1) zum Betreiben eines Routing-Knotens, v E V, in einem Routing-Netz mit mehreren Topologien, MTR-Netz, G = *(V,* A), das ein Interior-Gateway-Routing-Protokoll, IGP, einsetzt, wobei das Verfahren (1) Folgendes umfasst:

Empfangen (101) einer Vielzahl von IGP-Ankündigungen, die jeweils eine Verknüpfungsmetrik, $c_\alpha^k$, einer jeweiligen einen, $\alpha$ E A, einer Vielzahl von Verknüpfungen, A, des MTR-Netzes, G, in einer jeweiligen einen, k E K, einer Vielzahl, K, von IGP-Topologien in dem MTR-Netz, G, umfassen;
Empfangen (102) einer Anzahl an Skalarvektoren, $\overline{\lambda}_n$, die einer entsprechenden Anzahl, N, an virtuellen IGP-Topologien in dem MTR-Netz, G, zugeordnet ist und jeweils eine Vielzahl von Skalarkomponenten, $\lambda_n^k$, umfasst, die der entsprechenden Vielzahl, *K,* von IGP-Topologien in dem MTR-Netz, *G*, zugeordnet ist;
Berechnen (103) einer virtuellen Verknüpfungsmetrik, $c_\alpha^{K+n}$, einer jeweiligen einen, $\alpha \in A$, der Vielzahl von Verknüpfungen, *A*, des MTR-Netzes, *G*, in einer jeweiligen einen, $n \in N$, der Anzahl, *N*, an virtuellen IGP-Topologien in dem MTR-Netz, *G*, in Abhängigkeit von der Vielzahl, *K,* von Verknüpfungsmetriken, $c_\alpha^k$, der jeweiligen einen, $\alpha \in A$, der Vielzahl von Verknüpfungen, *A*, des MTR-Netzes, *G*, in der entsprechenden Vielzahl, K, von IGP-Topologien in dem MTR-Netz, *G*, und des Skalarvektors, $\overline{\lambda}_n$, welcher der jeweiligen einen, $n \in N$, der Anzahl, *N*, an virtuellen IGP-Topologien in dem MTR-Netz, *G*, zugeordnet ist; und
Berechnen (104) eines Baumes, $T_v^{K+n}$, der die jeweilige eine, $n \in N$, der Anzahl, *N,* an virtuellen IGP-Topologien abdeckt, wobei der Baum einen Baum kürzester Pfade, SPT, umfasst, der in dem Routing-Knoten, $v \in V$, verwurzelt ist, und der SPT durch Ausführen eines Algorithmus kürzester Pfade basierend auf den virtuellen Verknüpfungsmetriken, $c_\alpha^{K+n}$, erlangt wird.

2. Verfahren (1) nach Anspruch 1, wobei das Berechnen (103) der virtuellen Verknüpfungsmetrik, $c_\alpha^{K+n}$, Folgendes umfasst:

Hinzufügen (103A) der Vielzahl, *K*, von Verknüpfungsmetriken, $c_\alpha^k$, der jeweiligen einen, $\alpha \in A$, der Vielzahl von Verknüpfungen, *A*, des MTR-Netzes, *G*, in der entsprechenden Vielzahl, *K*, von IGP-Topologien in dem MTR-Netz, *G*, jeweils multipliziert mit der entsprechenden einen der Vielzahl von Skalarkomponenten, $\lambda_n^k$, die der Vielzahl, *K*, von IGP-Topologien in dem Netz, *G*, zugeordnet ist, oder
Hinzufügen (103B) der Vielzahl, *K*, von Verknüpfungsmetriken, $c_\alpha^k$, der jeweiligen einen, $\alpha \in A$, der Vielzahl von Verknüpfungen, *A*, des MTR-Netzes, *G*, in der entsprechenden Vielzahl, *K*, von IGP-Topologien in dem MTR-Netz, *G*, jeweils potenziert zu der entsprechenden einen der Vielzahl von Skalarkomponenten, $\lambda_n^k$, die der Vielzahl, *K*, von IGP-Topologien in dem MTR-Netz, *G*, zugeordnet ist, oder
Hinzufügen (103C) der Vielzahl, *K*, von Verknüpfungsmetriken, $c_\alpha^k$, der jeweiligen einen, $\alpha \in A$, der Vielzahl von Verknüpfungen, *A*, des MTR-Netzes, *G*, in der entsprechenden Vielzahl, *K*, von IGP-Topologien in dem MTR-Netz, *G*, und der entsprechenden einen der Vielzahl von Skalarkomponenten, $\lambda_n^k$, die der Vielzahl, *K*, von IGP-Topologien in dem MTR-Netz, *G*, zugeordnet ist.

3. Verfahren (1) nach Anspruch 1 oder Anspruch 2, ferner umfassend,
als Reaktion auf Empfangen eines aktualisierten einen der Anzahl an Skalarvektoren, $\overline{\lambda}_n$, die der entsprechenden Anzahl, N, an virtuellen IGP-Topologien in dem MTR-Netz, G, zugeordnet ist, Auslösen des Berechnens (103) der virtuellen Verknüpfungsmetrik, $c_\alpha^{K+n}$.

**4.** Verfahren (1) nach einem der vorhergehenden Ansprüche, ferner umfassend,

als Reaktion auf Empfangen einer IGP-Ankündigung, umfassend eine aktualisierte Verknüpfungsmetrik, $c_\alpha^k$, einer jeweiligen einen, $\alpha \in A$, der Vielzahl von Verknüpfungen, $A$, des MTR-Netzes, $G$, in einer jeweiligen einen, $k \in K$, der Vielzahl, $K$, von IGP-Topologien in dem MTR-Netz, $G$, Auslösen des Berechnens (103) der virtuellen Verknüpfungs-metrik, $c_\alpha^{K+n}$.

**5.** Verfahren (1) nach einem der vorhergehenden Ansprüche, ferner umfassend

Empfangen (105) von Positionsgeberinformationen, die einem jeweiligen einen, $i$, einer Anzahl an Diensten ($s_i$, $d_i$) an den Routing-Knoten, $v \in V$, des MTR-Netzes, $G$, zugeordnet sind; und
Weiterleiten (106), basierend auf den empfangenen Positionsgeberinformationen, des jeweilige einen, $i$, der Anzahl an Diensten ($s_i$, $d_i$) über eine jeweilige eine der Vielzahl, $N$, von virtuellen IGP-Topologien in dem MTR-Netz, $G$.

**6.** Verfahren (1) nach Anspruch 5,

wobei die Positionsgeberinformationen ein DSCP/ToS-Feld in einem IP-Paketheader umfassen oder
wobei die Positionsgeberinformationen ein Positionsgeberfeld in einem SRv6-Paketheader umfassen.

**7.** Verfahren (1) nach einem der vorhergehenden Ansprüche, ferner umfassend ein unterstützendes Verfahren (2) zum Betreiben eines Netzverwalterknotens, $m \in V$, der dazu konfiguriert ist, den Routing-Knoten, $v \in V$, ebenfalls in dem MTR-Netz, $G = (V, A)$, welches das IGP einsetzt, zu unterstützen, wobei das unterstützende Verfahren (2) Folgendes umfasst:

Empfangen (201) einer Vielzahl von IGP-Ankündigungen, die jeweils eine Verknüpfungsmetrik, $c_\alpha^k$, einer jeweiligen einen, $\alpha \in A$, einer Vielzahl von Verknüpfungen, $A$, des MTR-Netzes, $G$, in einer jeweiligen einen, $k \in K$, einer Vielzahl, $K$, von IGP-Topologien in dem MTR-Netz, $G$, umfassen;
Berechnen (204) einer Anzahl an Skalarvektoren, $\overline{\lambda}_n$, die einer entsprechenden Anzahl, $N$, an virtuellen IGP-Topologien in dem MTR-Netz, G, zugeordnet ist und jeweils eine Vielzahl von Skalarkomponenten, $\lambda_n^k$, umfasst, die der entsprechenden Vielzahl, K, von IGP-Topologien in dem MTR-Netz, $G$, zugeordnet ist; und
Senden (205) der Anzahl an Skalarvektoren, $\overline{\lambda}_n$, an mindestens einen Routing-Knoten, $v \in V$, des MTR-Netzes, $G$.

**8.** Unterstützendes Verfahren (2) nach Anspruch 7, ferner umfassend

Hinzufügen (202) einer oder mehrerer IGP-Topologien zu der Vielzahl, K, von IGP-Topologien in dem MTR-Netz, G; und/oder
Modifizieren (203) einer oder mehrerer der Vielzahl, K, von IGP-Topologien in dem MTR-Netz, G.

**9.** Unterstützendes Verfahren (2) nach Anspruch 7 oder Anspruch 8, wobei das Berechnen (204) der Anzahl an Skalarvektoren, $\overline{\lambda}_n$, Folgendes umfasst:
Berechnen (204A) der Anzahl an Skalarvektoren, $\overline{\lambda}_n$, gemäß einer Anzahl an Shared-Risk-Link-Group-Beschränkungen, SLRG-Beschränkungen, die jeweils einem Teilsatz der Vielzahl von Verknüpfungen, A, des MTR-Netzes, G, zugeordnet ist.

**10.** Unterstützendes Verfahren (2) nach einem der Ansprüche 7 bis 9, ferner umfassend

Empfangen (206) einer Verkehrsmatrix, die eine Anzahl an Diensten ($s_i$, $d_i$) zwischen jeweiligen Quell- und Zielknoten, $s_i$, $d_i \in V$, des MTR-Netzes, G, definiert; und
Abbilden (207) jedes, $i$, der Anzahl an Diensten ($s_i$, $d_i$) auf eine jeweilige eine der Vielzahl, $K + N$, von IGP-Topologien oder virtuellen IGP-Topologien in dem MTR-Netz, G, gemäß der Verkehrsmatrix.

**11.** Unterstützendes Verfahren (2) nach Anspruch 10, wobei das Abbilden (207) jedes, $i$, der Anzahl an Diensten ($s_i$, $d_i$) Folgendes umfasst:

Duplizieren (207A) eines jeweiligen einen, i, der Anzahl an Diensten ($s_i$, $d_i$); und

Abbilden (207B) jedes, $i_1$, $i_2$, der duplizierten Dienste ($s_i$, $d_i$) auf disjunkte eine der Vielzahl, $K + N$, von IGP-Topologien oder virtuellen IGP-Topologien in dem MTR-Netz, G, gemäß einem Frame-Replication-and-Elimination-for-Reliability-Schema, FRER-Schema.

**12.** Unterstützendes Verfahren (2) nach Anspruch 10 oder Anspruch 11, wobei das Abbilden (207) jedes, i, der Anzahl an Diensten ($s_i$, $d_i$) Folgendes umfasst:

Abbilden (207C) eines jeweiligen einen, *i*, der Anzahl an Diensten ($s_i$, $d_i$) auf eine operative eine der Vielzahl, *K + N*, von IGP-Topologien oder virtuellen IGP-Topologien in dem MTR-Netz, G, gemäß einem Loop-Free-Alternate-Fast-Reroute-Schema, LFA-FRR-Schema; und/oder
Abbilden (207D) eines jeweiligen einen, i, der Anzahl an Diensten ($s_i$, $d_i$) auf disjunkte eine der Vielzahl, K + N, von IGP-Topologien oder virtuellen IGP-Topologien in dem MTR-Netz, G, gemäß einem Lastausgleichsschema.

**13.** Einrichtung (3, 4), die dazu konfiguriert ist, als ein Routing-Knoten, $v \in V$, oder als ein Netzverwalterknoten, $m \in V$, eines Netzes, G = (V, A), das ein IGP einsetzt, betrieben zu werden, wobei die Einrichtung (3, 4) Folgendes umfasst:

einen virtuellen Metrikaktualisierer (301), der dazu konfiguriert ist, das Verfahren (1) nach einem der Ansprüche 1 bis 6 durchzuführen, falls die Einrichtung (3) dazu konfiguriert ist, als der Routing-Knoten betrieben zu werden; und optional
einen virtuellen Metrikentwerfer (401), der dazu konfiguriert ist, das unterstützende Verfahren (2) nach einem der Ansprüche 7 bis 12 durchzuführen, falls die Einrichtung (4) dazu konfiguriert ist, als der Netzverwalter betrieben zu werden.

**14.** Computerprogramm, umfassend
Ausführbare Anweisungen, die, wenn sie durch einen Prozessor ausgeführt werden, den Prozessor dazu veranlassen, das Verfahren (1) nach einem der Ansprüche 1 bis 6 und optional das unterstützende Verfahren (2) nach einem der Ansprüche 7 bis 12 durchzuführen.

## Revendications

**1.** Procédé (1) de fonctionnement d'un nœud de routage, v E V, dans un réseau de routage multi-topologie, MTR, G = (V, A), déployant un protocole de routage de passerelle intérieure, IGP, le procédé (1) comprenant

la réception (101) d'une pluralité d'annonces IGP comprenant respectivement une métrique de lien, $c_a^k$, d'un lien respectif, a EA, d'une pluralité de liens, A, du réseau MTR, G, dans une topologie IGP respective, k E K, d'une pluralité, K, de topologies IGP dans le réseau MTR, G ;
la réception (102) d'un nombre de vecteurs scalaires, $\overline{\lambda}_n$, associés à un nombre correspondant, N, de topologies IGP virtuelles dans le réseau MTR, G, et comprenant respectivement une pluralité de composants scalaires, $\lambda_n^k$, associés à la pluralité correspondante, *K,* de topologies IGP dans le réseau MTR, G ;

le calcul (103) d'une métrique de lien virtuel, $c_a^{K+n}$, d'un lien respectif, a E A, de la pluralité de liens, A, du réseau MTR, G, dans une topologie IGP virtuelle respective, *n E N,* du nombre, N, de topologies IGP virtuelles dans le réseau MTR, G, en fonction de la pluralité, K, de métriques de lien, $c_a^k$, du lien respectif, a E A, de la pluralité de liens, A, du réseau MTR, G, dans la pluralité correspondante, K, de topologies IGP dans le réseau MTR, G, et du vecteur scalaire, $\overline{\lambda}_n$, associé à la topologie IGP virtuelle respective, $n \in N,$ du nombre, *N*, de topologies IGP virtuelles dans le réseau MTR, *G* ; et

le calcul (104) d'un arbre, $T_v^{K+n}$, couvrant la topologie IGP virtuelle respective, $n \in N$, du nombre, *N*, de topologies IGP virtuelles, dans lequel l'arbre comprend un arbre de chemin le plus court, SPT, enraciné dans le nœud de routage, $v \in V$, et le SPT est obtenu en exécutant un algorithme de chemin le plus court sur la base des métriques de lien virtuel, $c_a^{K+n}$.

**2.** Procédé (1) selon la revendication 1, le calcul (103) de la métrique de lien virtuel, $c_a^{K+n}$, comprenant

l'ajout (103A) de la pluralité, *K*, de métriques de lien, $c_a^k$, du lien respectif, $a \in A$, de la pluralité de liens, A, du réseau MTR, G, dans la pluralité correspondante, K, de topologies IGP dans le réseau MTR, G, respectivement multipliée par la composante scalaire correspondante de la pluralité de composantes scalaires, $\lambda_n^k$, associée à la pluralité, K, de topologies IGP dans le réseau, G, ou

l'ajout (103B) de la pluralité, K, de métriques de lien, $c_\alpha^k$, du lien respectif, $a \in A$, de la pluralité de liens, A, du réseau MTR, G, dans la pluralité correspondante, K, de topologies IGP dans le réseau MTR, G, respectivement élevée à la composante scalaire correspondante de la pluralité de composantes scalaires, $\lambda_n^k$, associée à la pluralité, K, de topologies IGP dans le réseau MTR, G, ou

l'ajout (103C) de la pluralité, K, de métriques de lien, $c_\alpha^k$, du lien respectif, $a \in A$, de la pluralité de liens, A, du réseau MTR, G, dans la pluralité correspondante, K, de topologies IGP dans le réseau MTR, G, et de la composante scalaire correspondante de la pluralité de composantes scalaires, $\lambda_n^k$, associée à la pluralité, K, de topologies IGP dans le réseau MTR, G.

3. Procédé (1) selon la revendication 1 ou la revendication 2, comprenant en outre
en réponse à la réception d'un vecteur scalaire mis à jour du nombre de vecteurs scalaires, $\overline{\lambda}_n$, associé au nombre correspondant, N, de topologies IGP virtuelles dans le réseau MTR, G, le déclenchement du calcul (103) de la métrique de lien virtuel, $c_a^{K+n}$.

4. Procédé (1) selon l'une quelconque des revendications précédentes, comprenant en outre
en réponse à la réception d'une annonce IGP comprenant une métrique de lien mise à jour, $c_a^k$, d'un lien respectif, $a \in A$, de la pluralité de liens, A, du réseau MTR, G, dans une topologie IGP respective, $k \in K$, de la pluralité, K, de topologies IGP dans le réseau MTR, G, le déclenchement du calcul (103) de la métrique de lien virtuel, $c_a^{K+n}$.

5. Procédé (1) selon l'une quelconque des revendications précédentes, comprenant en outre

la réception (105) d'informations de localisateur associées à un service respectif, i, d'un nombre de services ($s_i$, $d_i$) vers le nœud de routage, $v \in V$, du réseau MTR, G ; et
le transfert (106), sur la base des informations de localisateur reçues, du service respectif, i, du nombre de services ($s_i$, $d_i$) sur une topologie IGP virtuelle respective de la pluralité, N, de topologies IGP virtuelles dans le réseau MTR, G.

6. Procédé (1) selon la revendication 5,

les informations de localisateur comprenant un champ DSCP/ToS dans un en-tête de paquet IP, ou
les informations de localisateur comprenant un champ de localisateur dans un en-tête de paquet SRv6.

7. Procédé (1) selon l'une quelconque des revendications précédentes, comprenant en outre un procédé de support (2) de fonctionnement d'un nœud de gestion de réseau, $m \in V$, configuré pour prendre en charge le nœud de routage, $v \in V$, également dans le réseau MTR, G = (V, A), déployant l'IGP, le procédé de support (2) comprenant

la réception (201) d'une pluralité d'annonces IGP comprenant respectivement une métrique de lien, $c_a^k$, d'un lien respectif, $a \in A$, d'une pluralité de liens, A, du réseau MTR, G, dans une topologie IGP respective, $k \in K$, d'une pluralité, K, de topologies IGP dans le réseau MTR, G ;
le calcul (204) d'un nombre de vecteurs scalaires, $\overline{\lambda}_n$, associés à un nombre correspondant, N, de topologies IGP virtuelles dans le réseau MTR, G, et comprenant respectivement une pluralité de composants scalaires, $\lambda_n^k$, associés à la pluralité correspondante, K, de topologies IGP dans le réseau MTR, G ; et l'envoi (205) du nombre de vecteurs scalaires, $\overline{\lambda}_n$, à au moins un nœud de routage, $v \in V$, du réseau MTR, G.

8. Procédé de support (2) selon la revendication 7, comprenant en outre

l'ajout (202) d'une ou plusieurs topologies IGP à la pluralité, K, de topologies IGP dans le réseau MTR, G ; et/ou
la modification (203) d'une ou plusieurs topologies IGP de la pluralité, K, de topologies IGP dans le réseau MTR, G.

**9.** Procédé de support (2) selon la revendication 7 ou la revendication 8, le calcul (204) du nombre de vecteurs scalaires, $\overline{\lambda}_n$, comprenant

le calcul (204A) du nombre de vecteurs scalaires, $\overline{\lambda}_n$, conformément à un nombre de contraintes de groupe de liens à risque partagé, SLRG, respectivement associées à un sous-ensemble de la pluralité de liens, A, du réseau MTR, G.

**10.** Procédé de support (2) selon l'une quelconque des revendications 7 à 9, comprenant en outre

la réception (206) d'une matrice de trafic définissant un nombre de services $(s_i, d_i)$ entre des nœuds source et de destination respectifs, *si, $d_i \in V$*, du réseau MTR, *G* ; et
le mappage (207) de chacun, *i*, du nombre de services $(s_i, d_i)$ à une topologie IGP respective de la pluralité, *K + N,* de topologies IGP ou de topologies IGP virtuelles dans le réseau MTR, G, conformément à la matrice de trafic.

**11.** Procédé de support (2) selon la revendication 10, le mappage (207) de chacun, *i,* du nombre de services $(s_i, d_i)$ comprenant la duplication (207A) d'un service respectif, i, du nombre de services $(s_i, d_i)$ ; et

le mappage (207B) de chacun, $i_1, i_2$ des services dupliqués *(si, $d_i$)* à des topologies IGP disjointes de la pluralité, K + N, de topologies IGP ou de topologies IGP virtuelles dans le réseau MTR, G, conformément à un schéma de réplication et d'élimination de trames pour la fiabilité, FRER.

**12.** Procédé de support (2) selon la revendication 10 ou la revendication 11, le mappage (207) de chacun, *i*, du nombre de services $(s_i, d_i)$ comprenant

le mappage (207C) d'un service respectif, i, du nombre de services $(s_i, d_i)$ à une topologie IGP opérationnelle de la pluralité, *K + N,* de topologies IGP ou de topologies IGP virtuelles dans le réseau MTR, *G,* conformément à un schéma de reroutage rapide, FRR, avec alternative sans boucle, LFA ; et/ou
le mappage (207D) d'un service respectif, i, du nombre de services $(s_i, d_i)$ à des topologies IGP disjointes de la pluralité, *K + N,* de topologies IGP ou de topologies IGP virtuelles dans le réseau MTR, G, conformément à un schéma d'équilibrage de charge.

**13.** Dispositif (3, 4) configuré pour fonctionner en tant que nœud de routage, $v \in V$, ou nœud de gestion de réseau, $m \in V,$ d'un réseau, *G* = (*V, A*), déployant un IGP, le dispositif (3, 4) comprenant

un dispositif de mise à jour de métrique virtuelle (301) configuré pour réaliser le procédé (1) selon l'une des revendications 1 à 6, si le dispositif (3) est configuré pour fonctionner en tant que nœud de routage ; et éventuellement
un dispositif de conception de métrique virtuelle (401) configuré pour réaliser le procédé de support (2) selon l'une des revendications 7 à 12, si le dispositif (4) est configuré pour fonctionner en tant que gestionnaire de réseau.

**14.** Programme informatique, comprenant
des instructions exécutables qui, lorsqu'elles sont exécutées par un processeur, amènent le processeur à réaliser le procédé (1) selon l'une des revendications 1 à 6 et éventuellement le procédé de support (2) selon l'une des revendications 7 à 12.

FIG. 1

FIG. 2

FIG. 3

FIG. 4

## REFERENCES CITED IN THE DESCRIPTION

**Patent documents cited in the description**

*   EP 1913731 B1

**Non-patent literature cited in the description**

*   **GARDNER et al.** *Using multi-topology routing to improve routing during geographically correlated failures*
*   **LEE et al.** *Link weight assignment and loop-free routing table update for link state routing protocols in energy-aware internet*